# EUROPEAN PATENT SPECIFICATION

(11) **EP 1 669 912 B1**
(45) Date of publication and mention of the grant of the patent: **06.10.2010**
(21) Application number: 03751656.4
(22) Date of filing: 27.08.2003
(51) Int. Cl.: G06N 7/06, G08B 13/00, G06F 17/50

(54) **METHOD FOR DESIGNING AN INTEGRATED SECURITY SYSTEM FOR A FACILITY**
VERFAHREN ZUM ENTWURF EINES INTEGRIERTEN SICHERHEITSSYSTEMS FÜR EINE EINRICHTUNG
PROCEDE PERMETTANT DE CONCEVOIR UN SYSTEME DE SECURITE INTEGREE POUR UNE INSTALLATION

(43) Date of publication of application: 14.06.2006
(73) Proprietor: Zakrytoe Aktionernoe Obschestvo Proizvodstvenno-Vnedrencheskoe Predpriyatie "Amulet", Moscow 125480 (RU)
(72) Inventor: BELYAEVA, Ekaterina Alexandrovna, Moscow, 117279 (RU); KUZOYATOV, Oleg Petrovich, Moskovskaya obl., 141080 (RU); MOSOLOV, Alexandr Sergeevich, Moscow, 123430 (RU); NOVIKOV, Jury Vitalievich, Moskovskaya obl., 141410 (RU)
(74) Representative: HOFFMANN EITLE
(86) International application number: PCT/RU2003/000394
(87) International publication number: WO 2005/022457

(56) References cited:
- EP-A- 1 293 945
- WO-A1-83/01855
- JP-A- 7 334 779
- JP-A- 9 184 310
- RU-C1- 2 164 039
- RU-C2- 2 172 978
- US-A1- 2001 014 886
- SMITH J S ET AL: "Distributed real-time simulation for intruder detection system analysis" WINTER SIMULATION CONFERENCE PROCEEDINGS, 1999 PHOENIX, AZ, USA 5-8 DEC. 1999, PISCATAWAY, NJ, USA,IEEE, US, vol. 2, 5 December 1999 (1999-12-05), pages 1168-1173, XP010368062 ISBN: 0-7803-5780-9
- JORDAN S E ET AL: "Discrete-event simulation for the design and evaluation of physical protection systems" SIMULATION CONFERENCE PROCEEDINGS, 1998. WINTER WASHINGTON, DC, USA 13-16 DEC. 1998, PISCATAWAY, NJ, USA,IEEE, US, vol. 1, 13 December 1998 (1998-12-13), pages 899-905, XP010319728 ISBN: 0-7803-5133-9
- STEINBERG R A: "Infrared surveillance. I. Statistical model" APPLIED OPTICS USA, vol. 19, no. 1, 1 January 1980 (1980-01-01), pages 77-85, ISSN: 0003-6935

## Description

### FIELD OF THE INVENTION

The invention relates to the field of protection of a facility from unauthorized intrusion and in particular to a method for designing an integrated security system for a facility.

### BACKGROUND OF THE INVENTION

Various known methods for designing an integrated security system are known in the art. A designed integrated security system should provide required level of protection from supposed threats, reliability and economic effectiveness. Setting of too high requirements to the designed security system leads to ungrounded expenses, and understatement of the requirements increases risk of security violation.

Usually the following factors should be taken into account: type of averted security threats (e.g., fire, unauthorized intrusions in the area and movement therein, disruption of individual constructions integrity, removing of any items, breakdown of equipment, etc.), dimensions and planning properties of the protected facility, particular features of the deployed protecting equipment, requirement for sensors redoubling (overlapping of sensors coverage zones) in respect to the kinds of received information and the number of sensors.

The method for designing an integrated security system which is the most similar to the present invention is known from the book (V.S. Barsukov, "Security: technologies, instruments, services", 2001, "KUDIS-obraz", Moscow, pp.126-130).

The known method for designing provides building of a model of an integrated security system taking into account the supposed security threats. In particular, number of sensors and sensors types for integrated security system are chosen and placed at the model of the protected facility. The sensors are placed in the space of the protected facility and their coverage areas (effective area of the sensitive element) are directed to cover the space in a most complete manner and satisfying the requirement of redoubling (if the customer requires this). Sensors characteristics (sensitivity threshold, reliability) and customer requirements for security level, system reliability and planned financial expenses for the integrated security system in respect to the choice of sensors are taken into account at the designing. The customer requirements can include conditions of either single, double or triple control, heightened control of particularly protected places (a safe, important items, etc.) as well as conditions of possible absence of control in some places (a blank main wall, absence of flammable items in a part of the facility, etc.)

System design and sensors arrangement on a model can be provided in the known method by use of computer simulation with help of application programs or all necessary design operations can be made manually on paper.

The known method envisages verification of the working efficiency and quality of the designed system by an expert evaluation method with a relatively low number of quantitative factors. Usually coverage of the protected area by sensors is estimated visually as well as fulfillment of the double control requirement for particularly protected areas. This approach for verification of the working efficiency is characterized by high level of subjectivism that often leads to mistakes when testing the integrated security systems for facilities of complex geometry. Moreover, functioning analysis of complex integrated security systems with systematical interrelation of parts is related to considerable difficulties.

The design mistakes can be revealed at a stage of deployment of the designed integrated security system at the protected facility. It leads to the necessity to correct the mistakes at the stage of assembling the system and to make revision to the project at the site that leads to high expenses. Moreover, this requires presence of the designer at the facility that is not always acceptable for the customer for secrecy and safety reasons.

The main disadvantage of the known methods is in that their use always leaves a risk of not detected hidden faults in the system functioning, which is inadmissible in the security systems of facilities requiring high level of protection. In other words, the known methods for designing and testing of functioning reliability and quality of the designed integrated security system do not guarantee sufficient level of reliability required from security system for particularly important facilities (important industrial enterprises, banks, etc.) that imposes a substantial limitation on their use.

That fact that the customer is not provided with visual data on testing of the designed system at the acceptance stage of the project sets another limitation on the known methods for designing of an integrated security system. The customer accepts the completed project without detailed study and estimation of the testing results, that does not meet the customers' requirements for the present-day designing.

Moreover, the known methods for designing of an integrated security system are fulfilled separately from estimation of economic effectiveness of the designed system operation, in other words, without comparison between the system cost and its function effectiveness that does not allow to optimize this interrelation. Because of that the designers often choose economically ineffective solutions, for example, they design an expensive integrated security system for protection of simple facilities with low requirements for security.

Absence in the method for designing of an effective check of performance and economic effectiveness does not allow to introduce improvements and corrections in the integrated security system at the stage of system designing.

Reference is also directed to the article entitled "Distributed Real-Time Simulation for Intruder Detection System Analysis" by Smith, J. S. et al., in the Proceedings at the 1999 Winter Simulation Conference (IEEE, ISBN: 0-7803-5780-9), which describes a distributed simulation system developed for evaluation of physical security systems.

Furthermore, the article entitled "Discrete-Event Simulation for the Design and Evalution of Physical Protection Systems" by Jordan S. E. et al. in the Proceedings of the 1998 Winter Simulation Conference (IEEE, ISBN: 0-7803-5133-9) describes the use of discrete-event simulation for the design and control of physical protection systems for fixed-site facilities housing items of significant value.

The reader is also referred to JP 07 334779 A, which discloses a method and device for guard diagnosis for machine guard system.

EP 1 293 945 A1 discloses a planning tool, capable of being implemented on a computer, for the calculation of fire developments and modelling the response of fire alarm systems on the basis of the fire model. The fire model relies on a thermodynamic model of fire development over time. Accordingly, it is possible to model a response time within which an alarm unit will detect a fire.

### SUMMARY OF THE INVENTION

The present invention provides a method for designing an integrated security system according to Claim 1. Preferred embodiments are set out in the dependent claims.

A method for designing an integrated security system for a facility of a preferred embodiment provides a high reliable estimation of level of safety and function quality of the designed system in dynamic conditions and takes into account functional connections between separate parts of the system, the method allowing to evaluate effectiveness of the designed system in respect to the level of security and visually present the results of designing and estimation and make on-the-fly alterations in the designed system taking into account the results of comparing between the received estimation and estimation required in the performance specification of the project.

There is described in the following a method for designing an integrated security system for a facility providing building with use of a computer of a model of the protected facility, choosing types and a number of sensors of the system taking into account probable security threats of the facility, placing the system sensors in the model in space of the protected facility providing covering of that space by coverage areas, and making an expert evaluation of the designed system, wherein a database is created in the computer memory, the database storing sensors mathematical models describing coverage areas and function characteristics of the sensors; forming of the integrated security system model with help of the computer by arrangement of sensors models from the database at the model of the protected facility; testing functioning of the designed integrated security system by introducing testing actions therein; processing of the testing results with statistical methods and receiving estimation of the system model functioning, comparing this estimation with the required estimation value and, if necessary, changing the sensors arrangement and/or types and number thereof until the required estimation value is obtained in result of processing of the testing results.

The database is preferably created which database stores mathematical models of sensors describing coverage areas and functioning characteristic property of fire-prevention

sensors, movement sensors, sensors of closing-breaking type, vibration sensors, etc. The database can also be created storing mathematical models of other type sensors including temperature sensors, broken glass sensors, IR sensors, noise sensors.

A pseudorandom numbers method is used for input of testing influences in the system model for forming an even distribution of testing influences probability at the protected facility model.

A method for determining probability of different kind reaction in the whole system or in its individual sensors on testing influences is preferably used as a statistic method for processing the testing results. Other statistic methods for the testing results processing are also possible. For example it is possible to represent data on sensors response in a summary table. The statistic estimation can be carried on in a computer with use of special subprograms.

To make the testing results more reliable and in order to take into account the real environment conditions for functioning of the integrated security system, a model of interference induced to the sensors and connection lines is introduced in the model of the designed system. The model of interference is obtained with a special computer subprogram as it is known to the experts in the art.

The testing results processing by statistic methods includes additional determining of correct sensor functioning probability considering the interference.

Processing of the testing results by statistic methods may also include estimation of reliability of the testing results taking into account additional information available to the designer about properties of the designed system and the protected facility. The reliability estimation is provided with a subprogram by comparison between the tested sensors response results and additional information stored in a suitable form.

Information about high and low intrusion risk zones at the protected facility and on installed thereon additional equipment of physical protection and engineering security may be used as additional information. This information is stored in the suitably programmed computer memory accessed when received the model sensors reaction.

Cost of the designed system is preferably calculated in estimation of the system performances to take into account economic effectiveness of the designed integrated security system, the received economic estimation is compared with the required customer estimation of the system cost.

The built model of the designed integrated security system and the testing results may be presented on a computer screen and/or in a printed form to provide visualization of the design.

### BRIEF DESCRIPTION OF THE DRAWINGS

Characteristics and advantages of the method will be clear for an expert in the art from the following description of a particular nonlimiting embodiment of the integrated security system, with reference being made to the following figures.
Figure 1 shows a schematic view of a particular embodiment of the method according to the present invention.
Figure 2 shows a 2-D model of the integrated security system with 3 sensors placed at the facility of a rectangular form.

### DESCRIPTION OF PREFERRED EMBODIMENTS

A method for designing a rather simple integrated security system for a rectangular area having no specially protected zones that require double control, which forms a background example that is helpful for understanding the present invention, will now be described.

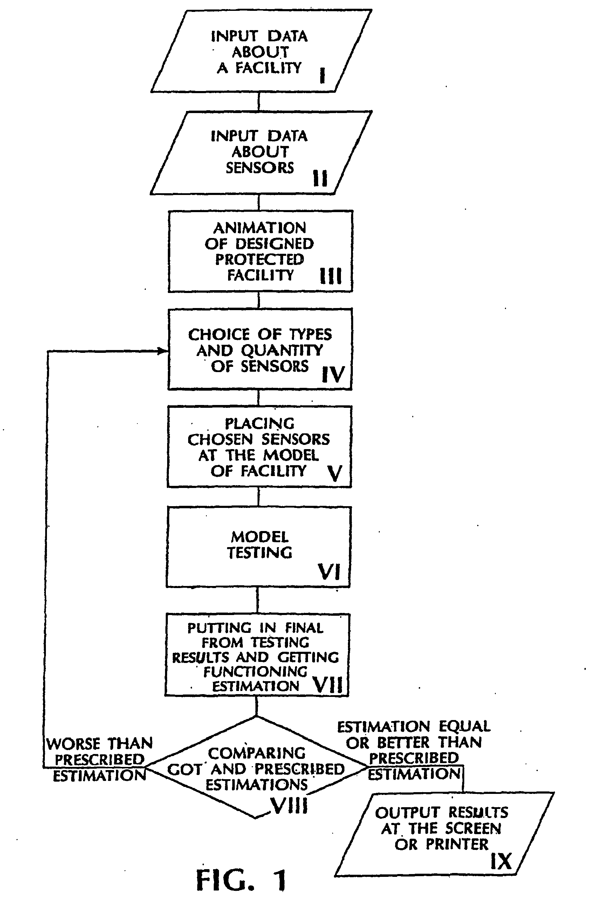

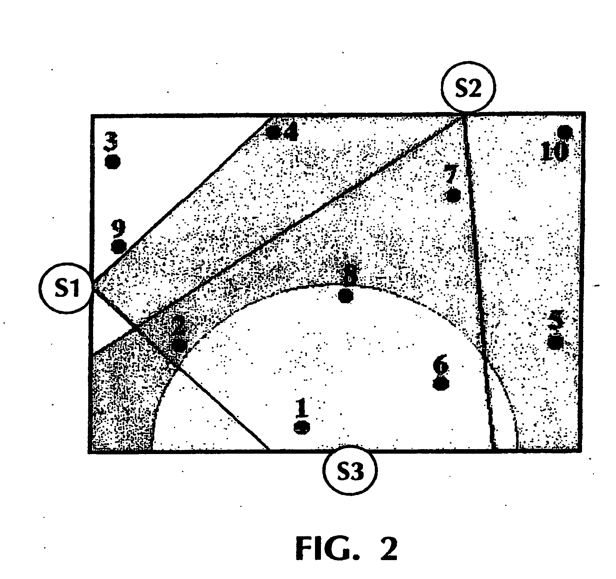

A customer laid down a requirement that probability of movement revealing in the facility was no less than 0.8 (the probability of not revealing was no more than 0.2) as an evaluation of the system functioning. The design was carried out with a computer estimation using a personal computer. Programs of graphic design and numerical statistics methods were downloaded in the computer memory. The method for designing on the example was carried out in accordance with a technological diagram shown in Figure 1. At step I the data on dimensions and shape of the protected facility were input in the computer memory - in this case this was a facility of a rectangular shape. At step II a database was created in the computer memory by inputting security sensors data; the database stored mathematical models of sensors and described functioning of the movement sensors having various shapes (cone, hemispheric) and dimensions of coverage areas. Using the graphical data and programs a visual model of the protected facility was built in the computer memory on the input data about the shape and dimensions of the facility (step III). A type and a number of sensors were chosen for integrated security system (step IV). The sensors were arranged in the model of the protected facility based on the customer requirements (step V). In this example data about 3 movement sensors (S1, S2, S3) was input in the integrated security system, two of the sensors (S 1 and S2) had a cone-shape coverage area and one of them (S3) had a spherical coverage area. The model of the integrated security system with a particular arrangement of sensors is shown in Figure 2. The sensors are placed on the side walls. The coverage areas are distributed so that to provide covering of the facility space as completely as possible. After the integrated security system was built it was tested (step VI). To this end, using a special subprogram in a pseudorandom way with even probability distribution of influence hit into any spot of the facility, coordinates of the testing influences were formed in the space of the protected facility. For clearness of perception, only 10 testing influences were used in the example. The received influences were marked by points with corresponding references 1-10 in Figure 2. For convenience the results of testing influences processed by system are summarized in the Table 1 shown below.

**Table 1**

| Sensors Influences | S1 | S2 | S3 |
|---|---|---|---|
| 1 | X | X | X |
| 2 | X | X | |
| 3 | | | |
| 4 | X | | |
| 5 | X | | |
| 6 | X | X | X |
| 7 | X | X | |
| 8 | X | X | X |
| 9 | | | |
| 10 | X | | |

Every line in the table corresponds to a certain testing influence, and every column in the table corresponds to a certain sensor of the integrated security system. Intersection of a line with a column has a symbol X if certain influence was revealed by a particular detector. The cell is empty in case the detector did not reveal any testing influence. The following results were obtained in this particular example of the sensors arrangement and a plurality of random testing influences:
1) Sensor S3 revealed 8 influences (that is 1, 2, 4, 5, 6, 7, 8 and 10), and 5 of 8 influences (that is 1, 2, 6, 7, 8) were redoubled by other sensors;
2) Sensor S2 revealed 5 influences (that is 1, 2, 6, 7, 8), all these 5 influences were redoubled by other sensors;
3) Sensor S3 revealed 3 influences (that is 1, 6, 8), all these 3 influences were redoubled by other sensors.

Processing of the testing results with statistical methods for obtaining the estimation of system functioning (step 7) was carried out in the following way:
1) Probability of not detection of influence by system was computed. P=K0/N, where K0 is a number of influences not detected by any sensor of the system, N is a number of influences. In the described test K0=2 (that is influences 3 and 9), N=10, therefore P0=2/10=0.2. In such way the estimation of functioning of the model was received as a statistical probability of not detection of testing influence (0.2);

To make additional analysis of the system functioning other estimations were computed in the particular example:
2) Probability of detection of influence by one of the sensors was Pd=Kd/N, where Kd is a number of influences detected by a particular sensor. For example, P1=0.8, P2=0.5, P3=0.3.
3) Probability of detection of influence by more than one sensor was pdd=Kdd/N, where Kdd is a number of influences detected by more than one sensor, Kdd=5 (that if influences 1, 2, 6, 7 and 8), Pdd=5/10=0.5.

The obtained estimation of the test results was compared with the required estimation (step VIII). In this example the built model of the integrated security system corresponds to the requirements for probability of not detection of testing influence (not less than 0.2) set by the customer, that can be shown by comparison of the received and required estimations. Thus the performance specification for the project was achieved.

However, an analysis of effectiveness of individual sensors functioning of the system can be carried out. Thus a conclusion on low effectiveness of sensor 3 functioning based on the received results can be made. Taking into account the obtained probability estimations, modification can be made for the integrated security system. For example, sensors can be added or removed, coverage areas of the sensors can be redirected and etc.

The test results, summary table and visual presentation of the system (see Figure 2) could be printed or shown at the screen for the customer (step 9).

In the described example of the method for designing an integrated security system, for better visualization, in addition to simple shape of the facility the following simplifications were applied: a plane was used for arrangement of the testing influences, a few testing influences were made (N=10) and interferences were not taken into account. In exemplary embodiments according to the present invention the testing can be carried out both within planes (surfaces) and in a volume (in the space); to get real results a large number of testing influences are generated and tested considering interferences.

The method of an embodiment allows, e.g. to form testing influences within a predetermined range of 2-D or 3-D coordinates, when value of each of two (or three) coordinates of the testing influence is a random sampled value with even probability distribution. The coordinate range is given taking into account characteristics of the protected facility. This coordinate range can be set narrower than the boundaries of the facility, for example, taking into account specially protected zones.

An important advantage of the method of an embodiment is its adaptability. It means that the modeling steps of the integrated security system of a facility, testing of the model functioning, analysis of the results and modification of the model are preferably made before building of the system which would satisfy all the customer requirements.

An advantage of the method is that designing of the system and its testing can be carried out without binding thereof to an address of a particular facility using only a mathematical model built on the basis of the provided by the costumer personally or through a third party (representing his interests) data on geometry of the facility and certain other relevant data, that provides a higher secret and security level at the stage of designing.

The method can be used in modernization projects of already existing integrated security system. To this end a model of already existing integrated security system is used in the method for testing its functioning and its possible modernization considering the testing results.

The present invention provides effective designing of the integrated security systems for facilities of various purpose.

### INDUSTRIAL APPLICABILITY

The method for designing an integrated security system of a facility can be successfully used for designing security systems of dwelling houses, industrial premises, facilities in the services sector, on transport and for other objects.

## Claims

1. A method for designing an integrated security system for a facility providing building including use in a computer of a model of the protected facility, the method including the steps of:
choosing types and a number of sensors (S1, S2, S3) of the system taking into account possible security threats of the facility (I);
placing the system sensors (S1, S2, S3) in the facility model in space of the protected facility, covering that space by coverage areas of the sensors and making an expert evaluation of the designed system (II);
creating a database in the computer memory, the database storing sensor mathematical models describing coverage areas and peculiar function characteristics of the sensors (S1, S2, S3),
forming an integrated security system model with help of a computer by arrangement of sensor models from the database at the model of the protected facility (V);
testing functioning of the designed integrated security system model by introducing testing influences therein (VI) ;
processing the testing results with statistical methods (VII);
receiving estimation of the system model functioning and comparing this estimation with the required estimation value (VIII); and if the estimation does not equal or exceed the required estimation changing the sensors (S1, S2, S3) arrangement of the system and/or types and number thereof until the required estimation value is obtained;
wherein the step of testing functioning of the designed integrated security system comprises the steps of:
having a pseudorandom numbers method for input of treating influences in the integrated sensority system model for forming an even distribution of testing influences, probability at any space of the protected facility model; and
for each influence, determining whether or not each of the plurality of sensors can detect the influence.

2. A method according to claim 1 **characterized in that** the database is created to store mathematical models of sensors (S1, S2, S3) describing coverage areas and functioning characteristic properties of industrial fire-prevention sensors, movement sensors, sensors of closing-breaking type and vibration sensors.

3. A method according to Claim 1 or Claim 2, **characterized in that** a pseudorandom number method is used for input of testing influences for forming an even distribution of testing influences probability in space of the protected facility model.

4. A method according to any of claims 1-3, **characterized in that** a method for determining probability of different kinds of reaction in the system or in its individual sensors on testing influences is used as a statistic method for processing the testing results

5. A method according to Claims 1-4, **characterized in that** the testing results processing by statistic methods includes estimation of reliability of the testing results taking into account additional information available to the designer about properties of the designed system and the protected facility.

6. A method according to Claim 5, **characterized in that** the information about high and low intrusion risk zones at the protected facility and on additional installed equipment thereon of physical protection and engineering security is used as additional information.

7. A method according to any of Claims 1-6, **characterized in that** the cost of the designed system is calculated in the estimation.

8. A method according to any of Claims 1-7, **characterized in that** the formed model of the designed integrated security system and the testing results are presented on a computer screen and/or in a printed form on a printing device.

9. A method according to Claim 1, wherein the step of processing the test results with statistical methods comprises the steps of:
calculating a probability of each influence not being detected by any sensor;
calculating a probability of each influence being detected by at least one sensor; and
calculating a probability of each influence being detected by more than one sensor.

10. A method according to Claim or Claim 9, wherein the co-ordinates of the influences are 2-D co-ordinates.

11. A method according to Claim 1 or Claim 9, wherein the co-ordinates of the influences are 3-D co-ordinates.

## Patentansprüche

1. Verfahren zum Entwerfen eines integrierten Sicherheitssystems für eine Einrichtung, die ein Gebäude bereitstellt, beinhaltend das Verwenden eines Modells der geschützten Einrichtung in einem Computer, das Verfahren beinhaltend:
Wählen eines Typs und einer Zahl von Sensoren (S1, S2, S3) des Systems unter Berücksichtigung möglicher Sicherheitsrisiken der Einrichtung (I);
Platzieren der Systemsensoren (S1, S2, S3) in dem Einrichtungsmodell in einem Bereich der geschützten Einrichtung, wobei der Bereich durch Abdeckungsräume der Sensoren abgedeckt wird und Durchführen einer Experten-Evaluation des entworfenen Systems (II);
Erzeugen einer Datenbank in dem Computerspeicher, wobei die Datenbank Sensor-mathematische Modelle speichert, die Abdeckungsräume und besondere Funktions-Charakteristika der Sensoren (S1, S2, S3) speichert;
Bilden eines integrierten Sicherheitssystemmodells mit Hilfe des Computers durch Anordnen von Sensormodellen von der Datenbank in dem Modell der geschützten Einrichtung (V);
Testen der Funktion des entworfenen integrierten Sicherheitssystemmodells durch Einführen von Testeinflüssen darin (VI);
Verarbeiten der Testergebnisse mit statistischen Verfahren (VII);
Empfangen einer Abschätzung der Systemmodellfunktion und Vergleichen der Abschätzung mit dem benötigten Abschätzungswert (VIII); und
wenn die Abschätzung nicht gleich der benötigten Abschätzung ist oder diese nicht überschreitet, Ändern der Sensoren-(S1, S2, S3)-Anordnung des Systems und/oder Typ und Zahl davon bis der benötigte Abschätzungswert erhalten wird;
wobei der Schritt des Testens der Funktion des entworfenen integrierten Sicherheitssystems die Schritte umfasst:
verwenden eines Pseudozufallzahlenverfahren zum Eingeben von Testeinflüssen in das integrierte Sicherheitssystemmodell zum Bilden einer gleichmäßigen Verteilung von Testeinflusswahrscheinlichkeiten an jedem Punkt des geschützten Einrichtungsmodells; und
für jeden Einfluss, Bestimmen, ob jeder der Vielzahl von Sensoren den Einfluss erfassen kann oder nicht.

2. Verfahren nach Anspruch 1, **dadurch gekennzeichnet, dass** die Datenbank erzeugt wird, um mathematische Modelle der Sensoren (S1, S2, S3) zu speichern, die Abdeckungsraum und Funktions-Charakteristikeigenschaften von industriellen Feuerverhinderungssensoren, Bewegungssensoren, Sensoren vom Schließen-Brechen-Typ der Vibrationssensoren beschreibt.

3. Verfahren nach einem der Ansprüche 1 oder 2, **dadurch gekennzeichnet, dass** das Pseudozufallnummernverfahren verwendet wird zum Eingeben von Testeinflüssen zum Bilden einer gleichmäßigen Verteilung von TesteinflussWahrscheinlichkeiten im Bereich des geschützten Einrichtungsmodells.

4. Verfahren nach einem der Ansprüche 1 bis 3, **dadurch gekennzeichnet, dass** ein Verfahren zum Bestimmen von Wahrscheinlichkeiten von verschiedenen Arten von Reaktionen in dem System oder in dessen individuellen Sensoren auf Testeinflüsse verwendet wird als ein statistisches Verfahren zum Verarbeiten der Testergebnisse.

5. Verfahren nach einem der Ansprüche 1 bis 4, **dadurch gekennzeichnet, dass** die Testergebnisverarbeitung durch statistische Verfahren Abschätzen einer Zuverlässigkeit der Testergebnisse beinhaltet unter Berücksichtigung von zusätzlicher Information, die im Entwerfer zugänglich ist, über Eigenschaften des entworfenen Systems und der geschützten Einrichtung.

6. Verfahren nach Anspruch 5, **dadurch gekennzeichnet, dass** die Information über Zonen hoher und niedriger Eindringungsrisiken an der geschützten Einrichtung und über darin zusätzlich installiertes Equipment von physikalischem Schutz und Konstruierungssicherheit als zusätzliche Information verwendet wird.

7. Verfahren nach einem der Ansprüche 1 bis 6, **dadurch gekennzeichnet, dass** die Kosten des entworfenen Systems in der Abschätzung berechnet werden.

8. Verfahren nach einem der Ansprüche 1 bis 7, **dadurch gekennzeichnet, dass** das gebildete Modell des entworfenen integrierten Sicherheitssystems und die Testergebnisse auf einem Computerbildschirm und/oder in einer gedruckten Form auf einem Druckgerät präsentiert werden.

9. Verfahren nach Anspruch 1, wobei der Schritt des Verarbeitens der Testergebnisse der statistischen Methoden die Schritte umfasst:
Berechnen einer Wahrscheinlichkeit jedes Einflusses, dass dieser nicht durch einen Sensor erfasst wird;
Berechnen einer Wahrscheinlichkeit jedes Einflusses, dass dieser in mindestens einem Sensor erfasst wird; und
Berechnen einer Wahrscheinlichkeit jedes Einflusses, dass dieser durch mehr als einen Sensor erfasst wird.

10. Verfahren nach Anspruch 1 oder Anspruch 9, wobei die Koordinaten der Einflüsse 2D-Koordinaten sind.

11. Verfahren nach Anspruch 1 oder Anspruch 9, wobei die Koordinaten der Einflüsse 3D-Koordinaten sind.

## Revendications

1. Procédé pour concevoir un système de sécurité intégrés pour un bâtiment fournissant des installations comprenant l'utilisation dans un ordinateur d'un modèle d'installation protégée, le procédé comprenant les étapes consistant à :
choisir des types et un nombre de capteurs (S1, S2, S3) du système en tenant compte de menaces de sécurité possibles pour l'installation (I) ;
placer les capteurs de système (S1, S2, S3) dans le modèle d'installation dans l'espace de l'installation protégée, couvrir cet espace par des zones de couverture des capteurs et effectuer une évaluation experte du système conçu (II) ;
créer une base de données dans la mémoire de l'ordinateur, la base de données stockant des modèles mathématiques de capteurs décrivant des zones de couverture et des caractéristiques de fonctions particulières des capteurs (S1, S2, S3) ;
former un modèle de système de sécurité intégré à l'aide d'un ordinateur par disposition de modèles de capteurs provenant de la base de données sur le modèle de l'installation protégée (V) ;
tester le fonctionnement du modèle de système de sécurité intégré conçu en introduisant des influences de test dans celui-ci (VI) ;
traiter les résultats de test avec des méthodes statistiques (VII) ;
recevoir une estimation du modèle de système fonctionnant et comparer cette estimation avec la valeur d'estimation nécessaire (VIII) ; et
si l'estimation n'est pas égale ou dépasse l'estimation nécessaire, changer l'agencement des capteurs (S1, S2, S3) du système et/ou leurs types et nombre jusqu'à ce que la valeur d'estimation nécessaire soit obtenue ;
dans lequel l'étape de test de fonctionnement du système de sécurité intégré conçu comprend les étapes consistant à :
utiliser une méthode de nombres pseudo-aléatoires pour l'entrée d'influences de test dans le modèle de système de sécurité intégré pour former une distribution uniforme de probabilité d'influences de test en n'importe quel point du modèle d'installation protégée ; et
pour chaque influence, déterminer si chacun de la pluralité de capteurs peut détecter l'influence.

2. Procédé selon la revendication 1, **caractérisé en ce que** la base de données est créée pour stocker des modèles mathématiques de capteurs (S1, S2, S3) décrivant des zones de couverture et des propriétés de caractéristiques de fonctionnement de capteurs industriels de prévention des incendies, capteurs de mouvement, capteurs de type fermeture-rupture et capteurs de vibrations.

3. Procédé selon la revendication 1 ou 2, **caractérisé en ce qu'**une méthode de nombres pseudo-aléatoires est utilisée pour l'entrée d'influences de test pour former une distribution uniforme de probabilité d'influences de test dans l'espace du modèle d'installation protégée

4. Procédé selon l'une quelconque des revendications 1 à 3, **caractérisé en ce qu'**une méthode de détermination de probabilité de différents types de réaction dans le système ou dans ses capteurs individuels sur des influences de test est utilisée comme une méthode statistique pour traiter les résultats de test.

5. Procédé selon l'une quelconque des revendications 1 à 4, **caractérisé en ce que** le traitement de résultats de test par des méthodes statistiques comprend une estimation de fiabilité des résultats de test tenant compte d'informations additionnelles disponibles pour le concepteur, concernant des propriétés du système conçu et de l'installation protégée.

6. Procédé selon la revendication 5, **caractérisé en ce que** les informations concernant des zones à haut et faible risque d'intrusion au niveau de l'installation protégée et sur des équipements additionnels installés sur celles-ci, de protection physique et de sécurité d'ingénierie, sont utilisées comme informations additionnelles.

7. Procédé selon l'une quelconque des revendications 1 à 6, **caractérisé en ce que** le coût du système conçu est calculé dans l'estimation.

8. Procédé selon l'une quelconque des revendications 1 à 7, **caractérisé en ce que** le modèle formé du système de sécurité intégré conçu et les résultats de test sont présentés sur un écran d'ordinateur et/ou sous une forme imprimée sur un dispositif d'impression.

9. Procédé selon la revendication 1, **caractérisé en ce que** l'étape de traitement des résultats de test avec des méthodes statistiques comprend les étapes consistant à :
calculer une probabilité de chaque influence qui n'est détectée par aucun capteur ;
calculer une probabilité de chaque influence qui est détectée par au moins un capteur ; et
calculer une probabilité de chaque influence qui est détectée par plus d'un capteur.

10. Procédé selon la revendication 1 ou 9, **caractérisé en ce que** les coordonnées de l'influence sont des coordonnées en 2 dimensions.

11. Procédé selon la revendication 1 ou 9, **caractérisé en ce que** les coordonnées de l'influence sont des coordonnées en 3 dimensions.
